**Europäisches Patentamt**

**European Patent Office**

**Office européen des brevets**

(11) Veröffentlichungsnummer: **0 292 863**
**A2**

# (12) EUROPÄISCHE PATENTANMELDUNG

(21) Anmeldenummer: **88107993.3**

(22) Anmeldetag: **19.05.88**

(51) Int. Cl.⁴: **B27F 1/00**

(30) Priorität: **26.05.87 DE 3717731**

(43) Veröffentlichungstag der Anmeldung:
**30.11.88 Patentblatt 88/48**

(84) Benannte Vertragsstaaten:
**AT BE CH DE ES FR GB GR IT LI LU NL SE**

(71) Anmelder: **OKOMA OBERKOCHENER MASCHINEN GMBH**
**Bahnhofstrasse 6**
**D-7082 Oberkochen(DE)**

(72) Erfinder: **Zweig, Siegfried, Dipl.-Ing.**
**Schreinergässle 5**
**D-7082 Oberkochen(DE)**

(74) Vertreter: **Wehser, Wulf, Dipl.-Ing. et al**
**Patentanwälte Wehser & Fleuchaus**
**Roscherstrasse 12**
**D-3000 Hannover 1(DE)**

(54) **Holzbearbeitungsmaschine.**

(57) Eine Holzbearbeitungsmaschine mit wenigstens einer Zapfenschlag-und Schlitzspindel, welcher eine Ablängvorrichtung und ein schwenkbarer Rolltisch zugeordnet sind, wobei der Rolltisch aus einem Rollwagen und einer dazu um eine senkrechte Achse - schwenkbaren, das Werkstück aufnehmenden Tischplatte besteht, soll so ausgebildet werden, daß trotz der Schwenkbarkeit des Rolltisches bzw. seiner Tischplatte in allen Winkelstellungen jeweils dieselbe Länge des schrägliegenden Fensterholzes erzeugt bzw. beibehalten wird.

Hierzu ist erfindungsgemäß vorgesehen, daß die senkrechte Schwenkachse des Rolltisches bzw. seiner Tischplatte in der Kreuzungsgeraden zwischen zwei senkrechten Ebenen liegt, von denen die eine sich parallel zur Vorschubrichtung des Rolltisches erstreckt, wobei sich in ihr die dem Rolltisch bzw. dem Werkstück zugewandte Seitenfläche des Sägeblattes der Ablängvorrichtung befindet, während in der anderen Ebene sich eine der beiden senkrechten Längsflächen des Werkstückes befindet, wobei die beiden Ebenen auf der dem Rolltisch zugewandten Seite der ersten Ebene diesseits des Werkstückes (des Fensterholzes) einen Winkel größer als 90° einschließen.

EP 0 292 863 A2

## Holzbearbeitungsmaschine

Die Erfindung betrifft eine Holzbearbeitungsmaschine mit wenigstens einer Zapfenschlag- und Schlitzspindel, welcher eine Ablängvorrichtung und ein schwenkbarer Rolltisch zugeordnet sind, wobei der Rolltisch aus einem Rollwagen und einer dazu um eine senkrechte Achse schwenkbaren, das Werkstück aufnehmenden Tischplatte besteht.

Mit Holzbearbeitungsmaschinen dieser Art werden in erster Linie die Enden von solchen Fensterhölzern mit Zapfen und Schlitzen versehen, die der Herstellung von rechteckigen oder quadratischen Fenstern dienen sollen. Demgemäß werden die Fensterhölzer mittels des Rolltisches an den Werkzeugen der Zapfenschlag- und Schlitzspindel so vorbeigeführt, daß ihre Längsachsen rechtwinklig zur Vorschubrichtung liegen. Auf diese Weise werden sie zunächst rechtwinklig zu ihrer Längsachse mittels der Ablängvorrichtung, meist in Form einer Ablängsäge, abgelängt und anschließend mit Zapfen und Schlitzen versehen, die sich ebenfalls rechtwinklig zu ihrer Längsausdehnung erstrecken.

Es sind auch bereits Rolltische bekannt, deren Tischplatte in der Horizontalebene um eine im Bereich des Rolltisches liegende senkrechte Achse - schwenkbar ist, so daß die Enden der Fensterhölzer in einem vom rechten Winkel abweichenden Winkel an der Ablängsäge und den Werkzeugen der Zapfenschlag-und Schlitzspindel vorbeigeführt werden können. Dies bedeutet, daß die Enden der Fensterhölzer schräg geschnitten werden und daß auch die Zapfen und Schlitze schräg verlaufen.

Zur späteren Abförderung, insbesondere einer Abförderung zu einer Längsprofiliereinrichtung, ist es dann meist erforderlich, nach dem Zapfenschlagen und Schlitzen das Fensterholz wieder auszurichten, d.h. in eine Lage zu bringen, in welcher die Längsachse des Fensterholzes im rechten Winkel zur Vorschubrichtung des Rolltisches liegt.

Nachteilig bei der bekannten Anordnung ist es, daß eine Schwenkung des Rolltisches bzw. seiner Tischplatte aufgrund der Lage der Schwenkachse bewirkt, daß das auf die Werkzeuge zuweisende Ende des Fensterholzes in Abhängigkeit von der Schwenkrichtung näher an die Werkzeuge herangerückt oder von diesen entfernt wird. Dies bedeutet, daß dann, wenn die Schnittflächen unter unterschiedlichen Winkeln verlaufen sollen, wie sie insbesondere bei Dreiecksfenstern vorkommen, die Aufspannung des Fensterholzes auf dem Rolltisch gelöst und die Fensterholzlänge vor dem schrägen Ablängen erneut ausgerichtet werden muß. Diese erneute Aufspannung und insbesondere die dortige Längeneinsteuerung ist aufwendig und darüber hinaus ungenau, da die Werkzeuge aufgrund der Schräglage des Fensterholzes kein leicht zugängliches Maß für die Längenfestlegung bieten.

Der Erfindung liegt demgemäß die Aufgabe zugrunde, eine Holzbearbeitungsmaschine der eingangs genannten Art so auszubilden, daß trotz der Schwenkbarkeit des Rolltisches bzw. seiner Tischplatte in allen Winkelstellungen jeweils dieselbe Länge des schräg liegenden Fensterholzes erzeugt bzw. beibehalten wird.

Diese Aufgabe wird erfindungsgemäß dadurch gelöst, daß die senkrechte Schwenkachse des Rolltisches bzw. seiner Tischplatte in der Kreuzungsgeraden zwischen zwei senkrechten Ebenen liegt, von denen die eine sich parallel zur Vorschubrichtung des Rolltisches erstreckt, wobei sich in ihr die dem Rolltisch bzw. dem Werkstück zugewandte Seitenfläche des Sägeblattes der Ablängvorrichtung befindet, während in der anderen Ebene sich eine der beiden senkrechten Längsflächen des Werkstückes befindet, wobei die beiden Ebenen auf der dem Rolltisch zugewandten Seite der ersten Ebene diesseits des Werkstückes (des Fensterholzes) einen Winkel größer als $90^\circ$ einschließen.

Mit dieser Anordnung wird erreicht, daß nach dem Ablängen der Rolltisch geschwenkt werden kann, ohne daß hierdurch, wie bei der bekannten Anordnung, die Aufspannung gelöst werden muß, weil Längenänderungen eintreten. Nach dem Ablängen, also auch bei einem Schrägschnitt, fällt in Draufsicht auf das Werkstück die die Länge vorgebende Spitze des Werkstückes mit der senkrechten Schwenkachse des Rolltisches zusammen, so daß die Tischplatte des Rolltisches mit dem Werkstück um die Spitze und damit um die Schwenkachse herum geschwenkt werden können. Über die Ebene, in welcher sich die dem Werkstück zugewandte Seite des Sägeblattes befindet, können Werkstückteile nicht hinaustreten.

Die erfindungsgemäß vorgesehene Lage der Schwenkachse bedingt, daß die Schwenkachse durch den Rolltisch mechanisch nicht gebildet werden kann. Insbesondere ist es nicht möglich, einen zentralen Zapfen, eine senkrechte Achse od. dgl. vorzusehen. Zur Erzielung einer Schwenkbewegung um die senkrechte Schwenkachse herum ist vielmehr erfindungsgemäß vorgesehen, daß die einander zugewandten Flächen der Tischplatte und des Rollwagens mit den ineinandergreifenden Teilen einer kreisförmig gebogenen Führung versehen sind. Die Führung hat einen Radius, der dem Abstand der Führung zu der Schwenkachse entspricht, d.h. die Schwenkachse liegt im Kreismittelpunkt der Führung.

Die Führung kann in bekannter Weise ausgestaltet sein, ein Teil kann insbesondere einen trapezförmigen Querschnitt haben, so daß eine genaue Passung mit dem Gegenstück gewährleistet ist.

Insbesondere können am Gegenstück der Führung Wälzlager mit Zylinderrollen vorgesehen sein, die eine reibungsarme Schwenkung ermöglichen. Ferner können Gleitlager- oder Wälzlagerabschnitte vorgesehen sein, die in Richtung auf die Führung verschiebbar sind, so daß auch insoweit die Passung genau einstellbar ist.

Die Erfindung wird im folgenden anhand von Ausführungsbeispielen in der Zeichnung näher erläutert.

Fig. 1 zeigt in schematischer Darstellung den Arbeitsablauf bei einer Ausführungsform der erfindungsgemäßen Holzbearbeitungsmaschine.

Fig. 2 ist eine Darstellung ähnlich Fig. 1 bei einer anderen Lage des zu bearbeitenden Werkstückes.

Fig. 3 zeigt in schematischer Darstellung den Rolltisch der erfindungsgemäßen Holzbearbeitungsmaschine bei abgenommener Tischplatte.

Fig. 4 ist eine Darstellung ähnlich Fig. 3 bei einer anderen Lage des Werkstückes.

Fig. 5 ist ein Querschnitt durch die Führung zwischen Tischplatte und Rollwagen.

Fig. 6 ist ein Querschnitt ähnlich Fig. 5 bei einer anderen Ausführungsform.

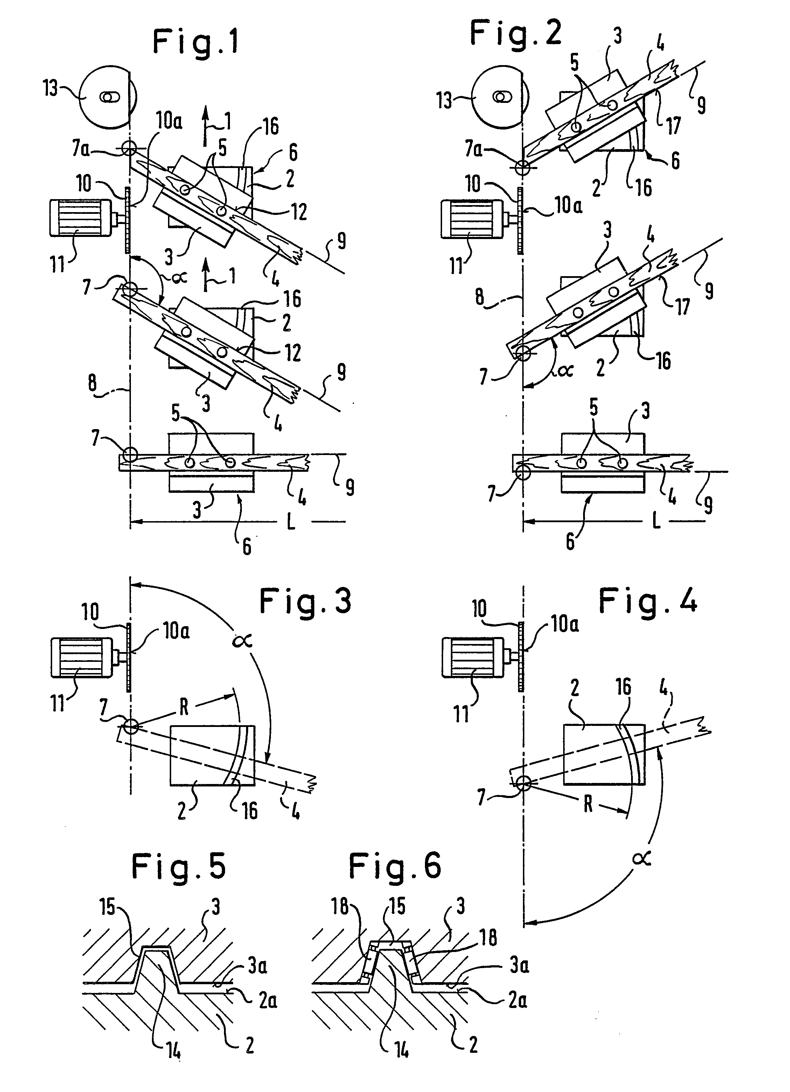

Gemäß Fig. 1 ist ein aus einem auf nicht dargestellten Führungen in Vorschubrichtung gemäß der Pfeile 1 bewegbarer Rollwagen 2 vorgesehen, der eine gegenüber ihm schwenkbare Tischplatte 3 trägt, die der Aufnahme eines zu bearbeitenden Werkstückes, insbesondere eines Fensterholzes 4 dient, welches durch Spannaggregate 5 auf der Tischplatte 1 festgespannt sein kann. Die Tischplatte 3 verdeckt in der unten in Fig. 1 wiedergegebenen Stellung den Rollwagen 2. Der Rolltisch insgesamt ist mit 6 bezeichnet.

Der Rolltisch 6 bzw. seine Tischplatte 3 ist um eine senkrechte Schwenkachse 7 schwenkbar, die in der Kreuzungsgeraden zwischen einer ersten senkrechten Ebene 8 und einer zweiten senkrechten Ebene 9 liegt. Die erste senkrechte Ebene 8 erstreckt sich in Vorschubrichtung 1 und fällt mit der dem Rolltisch 6 bzw. dem Werkstück 4 zugewandten Seite 10a eines Sägeblattes 10 einer Ablängsäge 11 zusammen. Die zweite senkrechte Ebene 9 ist so gelegt, daß sich eine der beiden senkrechten Längsflächen 12 des Fensterholzes 4 in dieser Ebene befindet. Die beiden Ebenen 8 und 9 schließen auf der dem Rolltisch 6 zugewandten Seite diesseits des Fensterholzes 4 einen Winkel α ein, der größer als 90° ist.

Der Ablängsäge 11 ist beim dargestellten Ausführungsbeispiel eine Zapfenschlag- und Schlitzspindel 13 nachgeschaltet, um das ihr zugewandte abgelängte Ende des Fensterholzes mit Zapfen und Schlitzen zu versehen.

Die Wirkungsweise der beschriebenen Anordnung ist folgende:

Das zu bearbeitende Fensterholz 4 soll aus einer normalen unten in Fig. 1 wiedergegebenen Aufspannstellung heraus an seinem der Ablängsäge 11 zugewandten Ende mit einem Schrägschnitt sowie gegebenenfalls mit Zapfen und Schlitzen versehen werden. In der Aufspannstellung unten in Fig. 1 ist eine bestimmte vorgegebene Länge L eingesteuert, wobei es sich bei der vorzunehmenden Ablängung um die erste oder auch die endgültige Abtrennung handeln kann.

Zur Erzielung der für den Gehrungs- oder Schrägschnitt geneigten Lage des Fensterholzes 4 wird die Tischplatte 3 um die senkrechte Schwenkachse 7 herum, wie in der Mitte von Fig. 1 wiedergegeben, geschwenkt, wobei die Länge L, nämlich der Abstand von der Schwenkachse 7 zum rückwärtigen Ende des Fensterholzes unverändert bleibt. In dieser geneigten Lage wird das Ende des Fensterholzes gegen das Sägeblatt 10 der Ablängsäge 11 geführt und entsprechend abgeschnitten, wodurch die die eingesteuerte Länge begrenzende Spitze 7a gebildet wird. Durch Weiterförderung wird das den Werkzeugen zugewandte Ende des Fensterholzes 4 durch die Zapfenschlag- und Schlitzspindel 13 mit Zapfen und Schlitzen versehen.

Um eine Schwenkung um die außerhalb des Rolltisches 6 liegende Schwenkachse 7 zu ermöglichen, sind die einander zugewandten Flächen 3a und 2a der Tischplatte 3 und des Rollwagens 2 (vgl. Figuren 5 und 6) mit den ineinandergreifenden Teilen 14 und 15 (vgl. Fig. 5) einer kreisbogenförmige gekrümmten Führung 16 versehen, deren Radius R (vgl. Fig. 3) dem Abstand der Führung 16 zu der Schwenkachse 7 entspricht. Die Schwenkachse 7 liegt mithin im Kreismittelpunkt der Führung 16.

Bei der Anordnung nach Fig. 1 ist die senkrechte Längsfläche 12 des Fensterholzes 4 so angeordnet, daß von dieser Seite her das Fensterholzende durch die Säge 11 bzw. die Zapfenschlag- und Schlitzspindel 13 bearbeitet wird. Die Werkzeuge erzeugen also zunächst die Spitze des Werkstückes und trennen erst dann das überstehende Teil ab. In Abhängigkeit von den jeweiligen Voraussetzungen, wie Holzart, Schnittgeschwindigkeit usw. kann es zweckmäßig sein, umgekehrt zu verfahren und die Werkzeuge zur Beendigung des Schnittes im Spitzenbereich austauschen zu lassen. Anderere Gegebenheiten können wiederum ein Schnittverfahren nach Fig. 1 notwendig machen.

Wie aus Fig. 2 hervorgeht, ist mit der erfindungsgemäßen Maschine beides möglich. Bei der Anordnung nach Fig. 2 ist der zwischen den Ebenen 8 und 9 gebildete Winkel α , der größer als 90° ist, auf der den Werkzeugen abgewandten Seite 17 des Fensterholzes 4 angeordnet. Auch hier bleibt die eingesteuerte Länge L in jeder Winkellage im Sinne des Winkels α voll erhalten.

Fig. 3 zeigt den Rollwagen 2 bei abgenommener Tischplatte, um die Form und Anordnung der kreisbogenförmig gekrümmten Führung 16 zu verdeutlichen. Im übrigen entspricht die Anordnung nach Fig. 3 derjenigen nach Fig. 1. Entsprechendes gilt für Fig. 4, deren Anordnung derjenigen nach Fig. 2 entspricht.

Fig. 5 ist ein Querschnitt durch ein Ausführungsbeispiel für die Führung 16, wobei hier mit dem Rollwagen 2 ein trapezförmiges Führungstück 14 verbunden ist, das von einer entsprechend geformten Nut übergriffen wird.

Fig. 6 zeigt eine etwas abgewandelte Ausführungsform; hier sind Zylinderrollen 18 zwischen den beiden Führungsteilen 14 und 15 vorgesehen, um eine reibungsarme Verstellung zu ermöglichen.

## Ansprüche

1. Holzbearbeitungsmaschine mit wenigstens einer Zapfenschlag-und Schlitzspindel, welcher eine Ablängvorrichtung und ein schwenkbarer Rolltisch zugeordnet sind, wobei der Rolltisch aus einem Rollwagen und einer dazu um eine senkrechte Achse schwenkbaren, das Werkstück aufnehmenden Tischplatte besteht, dadurch gekennzeichnet, daß die senkrechte Schwenkachse (7) des Rolltisches (6) bzw. seiner Tischplatte (3) in der Kreuzungsgeraden zwischen zwei senkrechten Ebenen (8,9) liegt, von denen die eine (8) sich parallel zur Vorschubrichtung (1) des Rolltisches (6) erstreckt, wobei sich in ihr die dem Rolltisch (6) bzw. dem Werkstück (4) zugewandte Seitenfläche (10a) des Sägeblattes (10) der Ablängvorrichtung (11) befindet, während in der anderen Ebene (9) sich eine der beiden senkrechten Längsflächen (12,17) des Werkstückes (4) befindet, wobei die beiden Ebenen (8,9) auf der dem Rolltisch (6) zugewandten Seite der ersten Ebene (8) diesseits des Werkstückes (des Fensterholzes 4) einen Winkel (α) größer als 90° einschließen.

2. Holzbearbeitungsmaschine nach Anspruch 1, dadurch gekennzeichnet, daß die einander zugewandten Flächen (2a,3a) der Tischplatte (3) und des Rollwagens (2) mit den ineinandergreifenden Teilen (14,15) einer kreisförmig gebogenen Führung (16) versehen sind.

3. Holzbearbeitungsmaschine nach Anspruch 2, dadurch gekennzeichnet, daß die Führung (16) einen Radius (R) hat, der dem Abstand der Führung (16) zu der Schwenkachse (7) entspricht.

4. Holzbearbeitungsmaschine nach Anspruch 3, dadurch gekennzeichnet, daß ein Teil (14) der Führung (16) einen trapezförmigen Querschnitt hat, der von einer entsprechend geformten Nut (15) übergriffen wird.

5. Holzbearbeitungsmaschine nach Anspruch 4, dadurch gekennzeichnet, daß in der Nut (15) Wälzlager mit Zylinderrollen (18) vorgesehen sind.

6. Holzbearbeitungsmaschine nach Anspruch 4 oder 5, dadurch gekennzeichnet, daß Gleitlager- oder Wälzlagerabschnitte vorgesehen sind, die in Richtung auf die Führung (16) verschiebbar sind.

0 292 863

# Fig.1

# Fig.2

# Fig.3

# Fig.4

# Fig.5

# Fig.6